# EUROPEAN PATENT APPLICATION

(11) **EP 2 345 681 A1**
(43) Date of publication of application: **20.07.2011**
(21) Application number: 09824764.6
(22) Date of filing: 02.11.2009
(51) Int. Cl.: C08G 18/66, C09D 5/02, C09D 175/06, C09D 175/08

(54) **COPOLYURETHANE RESIN HAVING POLYLACTIC ACID SEGMENT, AND AQUEOUS EMULSION AND COATING FLUID COMPOSITION, CONTAINING SAME**

(30) Priority: 04.11.2008 JP 2008282932; 16.07.2009 JP 2009167714
(71) Applicant: Toyo Boseki Kabushiki Kaisha, Osaka-shi, Osaka 530-8230 (JP)
(72) Inventor: KIZUMOTO, HIROTOSHI, Ohtsu-shi Shiga 520-0292 (JP); TANAKA, HIDEKI, Ohtsu-shi Shiga 520-0292 (JP); TAKASHINA, NAOKO, Ohtsu-shi Shiga 520-0292 (JP)
(74) Representative: Vossius & Partner
(86) International application number: PCT/JP2009/068749
(87) International publication number: WO 2010/053065

(57) **Abstract**

The present invention provides a poly (lactic acid) resin having a self-emulsification function where a stable aqueous dispersion can be formed even if no emulsifier is added and also to provide an aqueous dispersion and a coating solution composition containing the same. A copolymerized polyurethane resin having a poly(lactic acid) segment and a segment containing sulfonic acid salt group in a molecule, an aqueous emulsion wherein this resin is dispersed in a liquid, and a coating solution composition which contains this aqueous emulsion. The segment containing sulfonic acid salt group is preferred to comprise a copolymerized ester, and the sulfonic acid salt group is preferred to comprise one or more member (s) selected from sulfonic acid metal salt group, sulfonic acid quaternary ammonium salt group and sulfonic acid quaternary sulfonium salt group.

## Description

### Technical Field of the Invention

The present invention relates to a copolymerized polyurethane resin containing poly(lactic acid) segments and also to an aqueous emulsion and a coating solution composition containing the same.

### Background Art

In recent years, various kinds of treating agents for paints, inks, coating agents, adhesives, tackifiers, sealing agents, primers, fiber products and paper products are becoming to the direction of aqueous, highly solid and powdery ones from the conventional organic solvent type ones in view of the environmental problems. Particularly, making into the aqueous type by means of an aqueous dispersion has been of most general purpose and regarded to be promising in view of its good working ability and projection of working environment. In addition, the fact that the synthetic resin itself forming the aqueous dispersion is mainly constituted from biodegradable and plant-derived materials is preferred in view of environment pollution after disposal.

Lactic acid wherefrom poly(lactic acid) is produced uses a natural raw material such as corn or potato as a starting material and that is receiving public attention in the related industries. Poly(lactic acid) resin has such a property that it is degraded into water and carbon dioxide within several years in the soil or the sea water and it is highly safe and nontoxic for human body. Its aqueous dispersion has a possibility of being used in broad areas including industrial products such as paints, inks, coating agents, adhesives or primers due to its excellent coat processing property and closely adhering property to various substrates and also used in clothing, tableware, soaps, detergents, toothpastes, shampoos, rinses, cosmetics, milky lotions, hair dressing agents, perfumes, lotions and ointments utilizing its excellent detergency, water-retaining property, antibacterial property and low toxicity to human body.

With regard to an aqueous dispersion of poly (lactic acid), Patent Document 1, for example, proposes a compulsorily emulsified dispersion in which a poly(lactic acid) resin is emulsified and dispersed using an anionic emulsifier. Further, Patent Document 2 discloses a process for preparing an aqueous dispersion of a poly(lactic acid) resin by various means but a specific dispersing means shown in the Examples is an aqueous dispersion produced by a compulsory emulsifying formulation using an emulsifier such as poly(vinyl alcohol) or lecithin. Similarly, the Examples in Patent Document 3 also exemplify a process for preparing an aqueous dispersion using sodium stearate as an emulsifier.

However, in the particles of the above-exemplified aqueous dispersions, the dispersed particle size is big whereby there are problems that the resin is apt to be precipitated during the storage for long period and further that the physical property or, particularly, resistance to water of the coat prepared by drying the dispersion is inferior due to the affection of the emulsifier added thereto.

On the other hand, there are only a few examples for a poly(lactic acid) resin of a self-emulsification type where no emulsifier for a purpose of dispersing in water is necessary. In Patent Document 2, there are disclosures reading "a polar group such as sulfonic acid group, phosphoric acid group, carboxyl group or amino group is introduced into the terminal followed by stirring with warm water to prepare", "A hydrophilic polar group such as 5-sulfoiosphthalic acid, ......, 5-sulfosalicylic acid, methyl ester of such a carboxylic acid or metal salt or ammonium salt of such a carboxylic acid is introduced into poly(lactic acid)", etc. But, no specific method for the introduction is disclosed therein and, in the Examples, no example thereof is mentioned as well. Therefore, it is not apparent that how such a compound is specifically produced and what property is available therein. Patent Document 4 and Patent Document 5 disclose a poly(lactic acid) resin of a sulfonic acid metal salt group copolymerized type where a lactide is subjected to ring-opening addition reaction to a sulfonic acid salt-containing aromatic polyester polyol and mention that such a resin has an excellent pigment dispersibility. However, according to the above means disclosed in Patent Documents 4 and 5, concentration of the sulfonate in the polymer cannot be sufficiently enhanced whereby it is not possible to form stable emulsion particles of a self-emulsification type of the present invention. Further, according to a method where a hydrophilic group is introduced only into molecular terminal of the poly(lactic acid) resin as disclosed in Patent Document 2, it is not possible to introduce a polar group in such a sufficient concentration that enables to give a dispersion having small particle size being excellent in the stability of the dispersion upon storage. Alternately, there is a problem that the molecular weight of the poly(lactic acid) is to be lowered if the numbers of the terminal groups are to be increased whereby the physical property of the poly(lactic acid) itself is deteriorated.

### Prior Art Documents

### Patent Documents

Patent Document 1: Japanese Patent Application Laid-Open (JP-A) No. 101911/98
Patent Document 2: Japanese Patent Application Laid-Open (JP-A) No. 2003-277595
Patent Document 3: Japanese Patent Application Laid-Open (JP-A) No. 2004-2871
Patent Document 4: Japanese Patent Application Laid-Open (JP-A) No. 2003-147248
Patent Document 5: Japanese Patent Application Laid-Open (JP-A) No. 2001-323052

### Disclosure of the Invention

### Problem that the Invention is to Solve

The present invention has been achieved on the background of the problems in the prior art as such. Thus, the problem that the present invention is to solve is to provide a poly (lactic acid) resin having a self-emulsification function where a stable aqueous dispersion can be formed even if no emulsifier is added and also to provide an aqueous dispersion and a coating solution composition containing the same.

### Means for Solving the Problem

As a result of the extensive investigations, the present inventors have found that the above problems can be solved by the following means and achieved the present invention. Thus, the present invention comprises the following constitution.
(1) A copolymerized polyurethane resin having a poly(lactic acid) segment and a segment containing sulfonic acid salt group in a molecule.
(2) The copolymerized polyurethane resin according to (1), wherein the segment containing sulfonic acid salt group comprises a copolymerized ester.
(3) The copolymerized polyurethane resin according to (1) or (2), wherein the sulfonic acid salt group is one or more member(s) selected from sulfonic acid metal salt group, sulfonic acid quaternary ammonium salt group and sulfonic acid quaternary sulfonium salt group.
(4) The copolymerized polyurethane resin according to any of (1) to (3), wherein the resin comprises a structure being bonded by a polyaddition reaction of a poly(lactic acid) diol (A), a sulfonic acid salt group-containing diol (B) and a diol (C) other than (A) and (B) with a diisocyanate compound (D).
(5) The copolymerized polyurethane resin according to any of (1) to (4), wherein the concentration of the sulfonic acid salt group is 50 eq/ton to 500 eq/ton.
(6) The copolymerized polyurethane resin according to (4), wherein the diol (C) contains 2,2-dimethyl-3-hydroxypropyl-2',2'-dimethyl-3'-hydroxypropa nate.
(7) The copolymerized polyurethane resin according to (4), wherein the diol (C) contains a polyether diol.
(8) The copolymerized polyurethane resin according to (4), wherein 0.1 molar % to 5 molar % of the total amount of the diols (A), (B) and (C) is substituted with a polyol of three or more functions.
(9) The copolymerized polyurethane resin according to (4), wherein 0.1 molar % to 5 molar % of the diisocyanate compound (D) is substituted with a polyisocyanate of three or more functions.
(10) The copolymerized polyurethane resin according to (4), wherein the molar ratio (L/D) of L-lactic acid to D-lactic acid constituting the diol (A) is from 1 to 9 and the total weight fraction of L-lactic acid residue and D-lactic acid residue to the diol (A) is 50% by weight or more.
(11) An aqueous emulsion wherein the copolymerized polyurethane resin mentioned in any of (1) to (10) is dispersed in a liquid.
(12) The aqueous emulsion according to (11), wherein an average particle size of the emulsion particles is 400 nm or smaller.
(13) The aqueous emulsion according to (11) or (12), wherein the copolymerized polyurethane resin is self-emulsified.
(14) A coating solution composition which contains the aqueous emulsion mentioned in any of (11) to (13). Advantages of the Invention

Since the copolymerized polyurethane resin of the present invention has a sulfonic acid group of a sufficient concentration in its molecule, the copolymerized polyurethane resin itself has a self-emulsification function to water whereby, even if no emulsifier is added thereto, it is possible to form an aqueous emulsion having small particle size. As a result, stability of the emulsion upon storage is excellent and, when it is used as a coating solution composition and is applied to a substrate such as film followed by drying, a flat and smooth coat membrane having excellent transparency can be formed. Best Mode for Carrying Out the Invention

The sulfonic acid salt group-containing segment (B) copolymerized in the copolymerized polyurethane resin of the present invention is preferred to be a polyester diol compound having a chemical structure produced by a condensation reaction of a sulfonic acid salt group-having dibasic acid or a diester compound thereof with a glycol component. With regard to the preferred examples of the sulfonic acid salt group, there may be listed a sulfonic acid metal salt group, a sulfonic acid quaternary ammonium salt group and a sulfonic acid quaternary phosphonium salt group. With regard to the sulfonic acid metal salt group, there may be exemplified lithium salt, sodium salt, potassium salt, etc. with regard to the sulfonic acid quaternary ammonium salt group and sulfonic acid quaternary phosphonium salt group, there may be exemplified tetraalkylammonium salt and tetraalkylphosphonium salt. The alkyl mentioned hereinabove is preferred to be an alkyl group having 1 to 8 carbon(s) and it is not always necessary that it is constituted from one type of alkyl group.

With regard to the dibasic acid having the sulfonic acid salt, it is preferred to be one or more member(s) selected from isophthalic acid-5-sulfonate, terephthalic acid-3-sulfonate and 1,8-naphthalenedicarboxylic acid anhydride-4-sulfonate.

The diester compound of the dibasic acid having sulfonic acid salt group is preferred to be a diester compound of one or more dibasic acid(s) selected from isophthalic acid-5-sulfonate, terephthalic acid-3-sulfonate and 1,8-naphthalenedicarboxylic acid anhydride-4-sulfonate. It is also preferred to be a diester compound with a monohydric alcohol such as methanol or ethanol or a diester compound with a diol such as ethylene glycol or propylene glycol. It is particularly preferred to be a compound represented by the following formula (1) in view of broad applicability of the raw material. 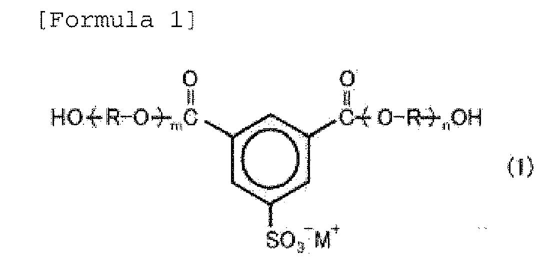 (In the formula, R is a divalent saturated aliphatic hydrocarbon group having 2 to 5 carbons; M is Li, Na, K, quaternary ammonium or quaternary phosphonium; m is a positive integer; n is a positive integer; and (m + n) is an integer of 2 to 10.)
Incidentally, in the above formula (1), the quaternary ammonium is preferred to be the following formula (2) while the quaternary phosphonium is preferred to be the following formula (3). 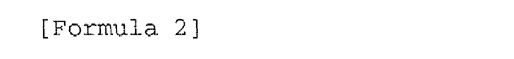 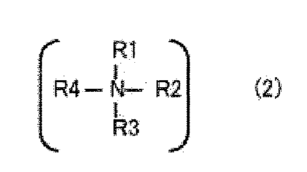 (In the formula, R1, R2, R3 and R4 may be same or different and each is a hydrocarbon group having 1 to 18 carbon(s).) 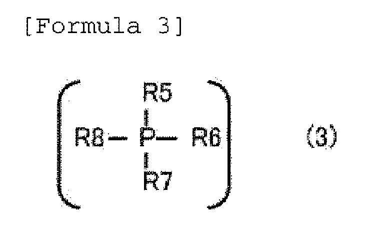 (In the formula, R5, R6, R7 and R8 may be same or different and each is a hydrocarbon group having 1 to 18 carbon(s).)

Hereinafter, in the copolymerized polyurethane resin of the present invention, the case where a sulfonic acid metal salt group is used as the sulfonic acid salt group in the molecule is adopted as a representative and it will be illustrated in detail.

The copolymerized polyurethane resin of the present invention has sulfonic acid metal salt group in its molecule and a self-emulsification function is achieved by this sulfonic acid metal salt group to form small aqueous dispersion particles. Concentration of the sulfonic acid metal salt group is preferred to be 50 eq/ton to 500 eq/ton, more preferred to be 100 eq/ton to 300 eq/ton, and much more preferred to be 150 eq/ton to 260 eq/ton. When the sulfonic acid metal salt group concentration is too low, particle size of the resulting aqueous dispersion particles becomes big whereby the stability upon storage and the coating adaptability lower. When the sulfonic acid metal salt group concentration is too high, a solution viscosity of the polyurethane solution becomes high and the polymerization reaction tends to be difficult. The term reading the coating adaptability used here is such a characteristic that, when the emulsion liquid is applied onto a substrate and then dried, a flat and smooth coat layer having excellent transparency can be prepared. When the coating adaptability is bad, surface of the dried coat becomes coarse and the transparency lowers or the film-forming characteristic itself is not achieved whereupon no coating layer is formed but crumbled film dusts are resulted.

The poly(lactic acid) segment and sulfonic acid metal salt group-containing segment in the copolymerized polyurethane resin of the present invention can be produced, for example, by a polyaddition reaction of a poly(lactic acid)-containing diol and a sulfonic acid metal salt group-containing diol with a diisocyanate. It is also possible to conduct the polyaddition reaction in the co-presence of a different diol component and various functions can be added by the selection of the diol components used.

The sulfonic acid metal salt group-containing segment which is copolymerized to the copolymerized polyurethane resin of the present invention is preferred to be a polyester diol compound having a chemical structure produced by a condensation reaction of a sulfonic acid metal salt group-having dibasic acid or a diester compound thereof with a glycol component. The sulfonic acid metal salt group-having dibasic acid is preferred to be one or more member (s) selected from 5-sodium sulfoisophthalate, 3-sodium sulfoterephthalate and 4-potassium sulfo-1, 8-naphthalenedicarboxylate anhydride. With regard to the sulfonic acid metal salt group, there may be exemplified sodium salt, lithium salt and potassium salt. Among them, 5-sodium sulfoisophthalate is particularly preferred in view of its broad applicability and also of the solubility of the sulfonic acid metal salt group-containing segment produced by copolymerization into commonly used solvents. The glycol component is preferred to be one or more member(s) selected from an aliphatic diol such as ethylene glycol, 1,2-propylene glycol, 1,3-propylene glycol, 1,2-butylene glycol, 1,3-butylene glycol, 2,3-butylene glycol, 1 , 4-butylene glycol, 2-methyl-1,3-propylene glycol, neopentyl glycol, 3-methyl-1,5-pentanediol, 2,2,4-trimethyl-1,3-pentanediol, 2,4-diethyl-2,5-pentanediol, 2-ethyl-1,3-hexanediol, 2,2-dimethyl-3-hydroxypropyl-2',2'-dimethyl-3'-hydroxy propanate, 2-n-butyl-2-ethyl-1,3-propanediol, 3-ethyl-1,5-pentanediol, 3-propyl-1,5-pentanediol, 2,2-diethyl-1,3-propanediol or 3-octyl-1,5-pentanediol; an alicyclic glycol such as 1,3-bis(hydroxymethyl)cyclohexane, 1,4-bis(hydroxymethyl)cyclohexane, 1,4-bis(hydroxyethyl)cyclohexane, 1,4-bis(hydroxymethoxy)cyclohexane, 1,4-bis(hydroxyethoxy)-cyclohexane, 2,2-bis(4-hydroxymethoxycyclohexyl)propane, 2,2-bis(4-hydroxyethoxycyclohexyl)propane, 2,2-bis(4-hydroxycyclohexyl)methane, 2,2-bis(4-hydroxycyclohexyl)propane or 3(4),8(9)-tricyclo[5.1.10^{2,6}]decanedimethanol; and an aromatic glycol such as an adduct of ethylene oxide or propylene oxide to hydroxy groups on both terminals of bisphenol A. In the glycol component as such, preferred ones in view of the solubility of the resulting sulfonic acid metal salt group-containing polyester diol compound into commonly used glycols are 2,2,4-trimethyl-1,3-pentanediol, 2,4-diethyl-1,5-pentanediol, 2-ethyl-1,3-hexanediol, 2,2-dimethyl-3-hydroxypropyl-2',2'-dimethyl-3'-hydroxy-propanate, 2,2-bis(4-hydroxycyclohexyl)propane and 3(4),8(9)-tricyclo[5.1.2.o^{2,6}]decanedimethanol. More preferred ones are 2,2-dimethyl-3-hydroxypropyl-2',2'-dimethyl-3'-hydroxy-propanate, 2,2-bis(4-hydroxycyclohexyl)propane and 3(4),8(9)-tricyclo[5.1.2.o^{2,6}]decanedimethanol and the most preferred one is 2,2-dimethyl-3-hydroxypropyl-2',2'-dimethyl-3'-hydroxypropanate.

In the above sulfonic acid metal salt group-containing segment, a dibasic acid or a diester compound thereof other than a sulfonic acid metal salt group-having dibasic acid or a diester compound thereof is copolymerized within a range of less than 90 molar % where the total acid amount is 100 molar % whereupon the solubility of the sulfonic acid metal salt group-containing segment in a solvent can be enhanced. As to the specific dibasic acid component, there may be exemplified an aromatic dibasic acid such as naphthalenedicarboxylic acid, terephthalic acid, isophthalic acid or orthophthalic acid; an aliphatic dibasic acid such as succinic acid, glutaric acid, adipic acid, azelaic acid, sebacic acid or dodecanoic acid; an alicyclic dibasic acid such as 1,2-cyclohexanedicarboxylic acid, 1,3-cyclohexanedicarboxylic acid or 1,4-cyclohexanedicarboxylic acid; and a diester compound thereof.

A number average molecular weight of the above sulfonic acid metal salt group-containing segment is preferred to be 200 to 2000, more preferred to be 250 to 1500, and much more preferred to be 300 to 1100. When the number-average molecular weight is too low, there is a tendency that polarity of the sulfonic acid salt group-containing segment becomes too high whereby the miscibility with other material becomes bad and uniform reaction hardly happens or that the component having no hydroxyl group at the molecular terminal of the sulfonic acid salt group-containing segment becomes too much whereby the copolymerizing property becomes bad. On the other hand, when the number average molecular weight is too high, there is a disadvantage that the copolymerizing rate of the sulfonic acid metal salt group-containing segment in the copolymerized polyurethane resin becomes high whereby the copolymerizing ratio of the poly(lactic acid) diol component lowers.

The poly(lactic acid) segment to be copolymerized to the copolymerized polyurethane resin of the present invention is preferred to be a polyester diol having a chemical structure which can be produced by means of a ring-opening addition of a lactide using a polyol as an initiating agent. The polyol is preferred to be a diol and more preferred to be an aliphatic diol.

The molar ratio (L/D) of L-lactic acid to D-lactic acid in the poly (lactic acid) segment of the present invention is preferred to be from 1 to 9. When the ratio is within such a range, the good solubility in a reaction solvent and the urethane reactivity in the polymerization of polyurethane can be achieved. When the molar ratio (L/D) of L-lactic acid to D-lactic acid is out of the above range, solubility of the poly (lactic acid) segment in commonly used solvents becomes bad and the copolymerization reactivity lowers.

Further, in the poly(lactic acid) segment of the present invention, it is preferred to make the content of the lactic acid residue high in view of making the biomass degree high. To be more specific, it is preferred that the total weight fraction of L-lactic acid residue to D-lactic acid residue in the poly(lactic acid) segment is made 50% by weight or more, more preferred to be made 70% by weight or more, and much more preferred to be made 90% by weight or more.

As to a method for the synthesis of the poly (lactic acid) segment of the present invention, the following two may be exemplified.
<First synthetic method> A method where a lactide monomer is subjected to a ring-opening addition polymerization using a diol containing no sulfonic acid metal salt group as an initiating agent.
<Second synthetic method> A method where a lactide monomer is subjected to a ring-opening addition polymerization using a diol containing sulfonic acid metal salt group as an initiating agent.

With regard to the initiating agent used in the above <first synthetic method>, various glycols exemplified as the constituting component for the sulfonic acid metal salt group-containing segment may be used. The use of a glycol having a relatively low molecular weight among the above ones such as ethylene glycol, 2-methylpentanediol or neopentyl glycol is preferred since it can keep the biomass degree relatively high. In that case, when the resulting poly(lactic acid) diol containing no sulfonic acid metal salt group is subjected to a urethane copolymerization with the above sulfonic acid metal salt group-containing segment, the copolymerized polyurethane resin of the present invention can be produced.

With regard to the initiating agent used in the above <second synthetic method>, there may be used a sulfonic acid metal salt group containing diol such as the above sulfonic acid metal salt group-containing segment and/or a condensation adduct of two-fold mole of ethylene glycol to 5-sodium sulfoisophthalate. In that case, since the resulting poly(lactic acid) segment contains a sulfonic acid metal salt group, said poly(lactic acid) segment may also be a sulfonic acid metal salt group-containing segment and, when this is subjected to a urethane copolymerization, the copolymerized polyurethane resin can be produced.

It is also possible to produce the copolymerized polyurethane resin of the present invention by subjecting the sulfonic acid metal salt group-containing poly(lactic acid) segment prepared in the above <second synthetic method> to a urethane copolymerization with the poly(lactic acid) segment containing no sulfonic acid metal salt group prepared in the above <first synthetic method>. Further, it is also possible to produce the copolymerized polyurethane resin of the present invention by subjecting the sulfonic acid metal salt group-containing poly(lactic acid) segment prepared in the above <second synthetic method> to a urethane copolymerization with a sulfonic acid metal salt group-containing segment containing no poly(lactic acid) component or by subjecting the sulfonic acid metal salt group-containing poly(lactic acid) segment prepared in the above <second synthetic method> to a urethane copolymerization with the poly(lactic acid) segment containing no sulfonic acid metal salt group prepared in the above <first synthetic method> and the sulfonic acid metal salt group-containing segment containing no poly(lactic acid) component. Those methods are excellent in such a respect that the control of the concentration of the sulfonic acid metal salt group of the copolymerized urethane resin is easy.

The number average molecular weight of the above poly(lactic acid) segment is preferred to be 400 to 10000, more preferred to be 800 to 5000, and much more preferred to be 1000 to 3000. When the number average molecular weight is less than 400, the amount of the lactide monomer to be subjected to a ring-opening addition to the initiator is small and the biomass degree of the resulting copolymerized polyurethane resin cannot be increased. On the other hand, when the number average molecular weight is more than 10, 000, numbers of hydroxyl group in the molecular terminal are small whereby the reactivity of the poly(lactic acid) diol is low and the reaction for making the molecular weight high by a urethane copolymerization hardly proceeds.

In the preferred embodiments of the present invention, a polyether segment is copolymerized to the copolymerized polyurethane resin whereby the coating adaptability to film or the like can be improved. Specific examples of the polyether compound include polyethylene glycol, polypropylene glycol and polytetramethylene glycol. Among them, polyethylene glycol is most preferred in view of its improving effect for the coating adaptability. Copolymerizing rate to the copolymerized polyurethane resin of the present invention is preferred to be 5% by weight to 20% by weight. When it is less than 5% by weight, the effect of improving the coating adaptability to film, etc. is not so expressed while, when it is more than 20% by weight, the glass transition temperature of the copolymerized polyurethane resin lowers whereby, when it is used as a coating agent for film, the anti-blocking characteristic tends to lower and that is not preferred. The number average molecular weight of the polyether segment which is to be copolymerized is suitably 200 to 6000 and, in view of enhancing the copolymerization reactivity and the coating adaptability, it is preferred to be 400 to 2000 and more preferred to be 400 to 1000.

When the copolymerized polyurethane of the present invention is copolymerized with a polyether segment, it is also a preferred embodiment that polypropylene glycol and/or polytetramethylene glycol are/is used as a polyether compound. In this embodiment, there is a tendency that a coating membrane having an excellent water resistance is achieved.

Examples of the diisocyanate compound (D) used for the copolymerized polyurethane of the present invention include an aromatic diisocyanate such as 2,4-tolylene diisocyanate, 2,6-tolylene diisocyanate, p-phenylene diisocyanate, 4,4'-diphenylmethane diisocyanate, m-phenylene diisocyanate, 3,3'-dimethoxy-4,4'-biphenylene diisocyanate, 2,6-naphthalene diisocyanate, 3,3'-dimethyl-4,4'-biphenylene diisocyanate, 4,4'-diphenylene diisocyanate, 4,4'-diisocyanate diphenyl ether, 1,5-naphtalene diisocyanate or m-xylene diisocyanate; and an aliphatic and an alicyclic diisocyanate such as hexamethylene diisocyanate, isophorone diisocyanate, 4,4' -diphenylmethane diisocyanate or m-xylene diisocyanate as well as a hydrogenated product thereof. Among them, 2,4-tolylene diisocyanate, 4,4'-diphenylmethane diisocyanate and hexamethylene diisocyanate are preferred in view of their broad applicability.

When a part of the diisocyanate compound used for the copolymerized polyurethane resin of the present invention is substituted with a three- or more highly functional polyisocyanate, it is possible that the molecular weight of the copolymerized polyurethane resin is apt to be made higher or that the reactivity with a hardener is enhanced. However, when the substituting rate of the three-functional polyisocyanate is too low, such an effect cannot be achieved while, when it is too high, gelling of the copolymerized polyurethane is resulted whereby the substituting rate to the three or more highly functional polyisocyanate is preferred to be from 0.1 molar % to 5 molar % and more preferred to be from 0.5 molar % to 3 molar %. Preferred examples of the three or more highly functional polyisocyanate include an adduct of three molecules of tolylene diisocyanate or three molecules of 1,6-hexane diisocyanate to one molecule of trimethylolpropane or glycerol and a compound having an isocyanurate ring formed by three molecules of 1,6-hexane diisocyanate.

When the copolymerized polyurethane resin of the present invention is copolymerized with a diol compound, an amino alcohol compound or a diamine compound, there are some cases where the toughness of the coat can be enhanced. With regard to the diol compound, there may be listed various kinds of glycols which were already exemplified as the constituting component of the sulfonic acid metal salt group-containing segment. A relatively low-molecular compound such as ethylene glycol, 1,2-propylene glycol, 1,3-propylene glycol, 2-methylpropylene glycol, neopentyl glycol, N-methylmonoethanolamine or ethylenediamine is able to keep the biomass degree relatively high.

Further, when the copolymerized polyurethane resin of the present invention is copolymerized with a polyol compound such as trimethylolpropane, triethanolamine or pentaerythritol to such an extent that the resulting copolymerized polyurethane resin is not gelled, it is possible to easily increase the molecular weight of the copolymerized polyurethane resin or to easily enhance the reactivity with a hardener. Among the polyols as such, trimethylolpropane having small molecular weight is preferred since it is able to keep the biomass degree relatively high. The copolymerizing rate of the polyol compound to the total amount of the poly(lactic acid) diol (A), sulfonic acid metal salt group-containing diol (B) and the diol (C) which is other than (A) and (B) constituting the copolymerized polyurethane resin of the present invention is preferred to be 0.1 molar % to 5 molar % and more preferred to be 0.5 molar % to 3 molar %.

An average particle size of the aqueous emulsion particles formed by the copolymerized polyurethane resin of the present invention is preferred to be 400 nm or smaller and more preferred to be 200 nm or smaller. When the average particle size is too big, stability of the emulsion upon storage is bad and the resin is apt to be precipitated during the storage. In addition, the coating adaptability also lowers whereupon a transparent and flat/smooth coat layer is hardly formed.

A number average molecular weight of the copolymerized polyurethane resin of the present invention is preferred to be 5000 to 40000, more preferred to be 8000 to 30000, and much more preferred to be 10000 to 25000. When it is less than 5000, concentration of the sulfonic acid metal salt group in a molecule is low and a stable emulsion cannot be formed. Moreover, the coat membrane prepared by coating becomes fragile as well. On the other hand, when it is more than 40000, the coating adaptability of the emulsion lowers and the flat and smooth coat layer is hardly formed.

The aqueous emulsion of the poly(lactic acid) polyurethane resin of a self-emulsion type according to the present invention can be produced by the process where, in the first stage, a copolymerized polyurethane resin is firstly polymerized in methyl ethyl ketone (hereinafter, it will be abbreviated as MEK), then water is mixed with the solution of the resin in MEK in the second stage and, after that, MEK is distilled from the reaction system although the process is not limited to the above-mentioned one.

The copolymerized polyurethane resin of the present invention can be stably stored and also be applied to a substrate material as a dispersion where the polymer particle is dispersed in 100% of water and it is also possible to further improve the coating adaptability onto the specific substrate material by compounding co-solvents such as a lower alcohol (e.g., methanol, ethanol, n-propanol and isopropanol), an acetate (e.g., ethyl acetate and butyl acetate) or an amide-type solvent (e.g., dimethyl formamide and dimethyl acetamide) in an optional concentration.

### Examples

The present invention will now be more specifically illustrated by way of Examples although the present invention is not limited by the following Examples but can be carried out with appropriate modifications within such an extent of being able to adapted to the gist of the present invention and all of them are within the scope of the technical coverage of the present invention.

Methods for the measurement and the evaluation adopted in the present specification are as shown below.

### (1) Number average molecular weight:

A gel permeation chromatograph (GPC) 150C manufactured by Waters was used wherein tetrahydrofuran was a carrier solvent and the measurement was conducted using an RI detector at a flow rate of 1 ml/minute. Shodex KF-802, KF-804 and KF-806 being in three were connected and used as a column and the column temperature was set at 30°C. A standard substance of polystyrene was used as a standard sample for the molecular weight.

### (2) Acid value of a diol oligomer containing sulfonic acid salt group:

A 80% solution (0.2 g) of the resin in toluene was dissolved in 20 ml of tetrahydrofuran and, after that, the measurement was conducted using a 0.1N ethanolic solution of NaOH where phenolphthalein was used as an indicator. The measurement value was expressed in equivalent numbers per 10⁶ g of the resin solid.

### (3) Acid value of a poly(lacic acid) oligomer:

The resin (0.5 g) was dissolved in 20 ml of a 3:1 mixed solvent of chloroform and methanol and, after that, the measurement was conducted using a 0.1N methanolic solution of sodium methoxide where phenolphthalein was used as an indicator. The measurement value was expressed in equivalent numbers per 10⁶ g of the resin solid.

### (4) Quantitative determination of concentration of sulfonic acid metal salt group:

As a means for estimating the concentration of sulfonic acid metal salt group in a sodium sulfonate-containing diol material and a copolymerized polyurethane resin, a quantitative determination of sodium concentration was conducted. Concentration of sodium was quantified by means of atomic absorption spectrophotometry after the copolymerized polyurethane resin was carbonated by heating to give ash and the residual ash was made into a solution acidified by hydrochloric acid. Concentration of the sulfonic acid metal salt group was calculated with an assumption that all of the detected sodium was derived from the sulfonic acid sodium salt group contained in the copolymerized polyurethane resin. Unit of the concentration was expressed in equivalent numbers per 10⁶ g (or one ton) (eq/ton) of the resin sample.

### (5) Quantitative determination of concentration of sulfonic acid quaternary phosphonium salt group:

Phosphorus concentration in the sample was measured and, with an assumption that all of the detected phosphorus was derived from the sulfonic acid quaternary phosphonium salt group contained in the copolymerized polyurethane, concentration of sulfonic acid quaternary ammonium salt group was calculated. Measurement of phosphorus concentration was conducted as follows. Thus, the sample was dried in a vacuum drier (110°C) until the weight reached constant and allowed to cool down to room temperature in a desiccator. A part of the sample was weighed in a 50-mL Erlenmeyer flask, 3 mL of sulfuric acid (97%; for a precise analysis), 3.5 mL of nitric acid (60%; for a precise analysis) and 0.5 mL of perchloric acid (60%; for a precise analysis) were added thereto and the temperature of the mixture was gradually raised to subject to an acid decomposition. Heating was continued until white smoke of sulfuric acid was confirmed so that nitric acid and perchloric acid were removed. A neutralizing treatment was conducted using aqueous ammonia, then molybdic acid was made to react with phosphoric acid in the decomposed solution, the resulting phosphomolybdic acid was reduced with hydrazine sulfate and absorption of the resulting heteropolyacid at 830 nm was measured to quantify. In conducting the quantification, a calibration curve which was separately determined using a standard phosphorus solution was used. Unit of the concentration was expressed in equivalent numbers per 10⁶ g (or one ton) (eq/ton) of the resin sample.

### (6) Glass transition temperature:

A sample (5 mg) was placed in a sample pan made of aluminum, tightly sealed and heated up to 200°C at the temperature-rising rate of 20°C/minute using a differential scanning calorimeter DSC-220 manufactured by Seiko Instruments KK to conduct the measurement and the glass transition temperature was determined by the temperature at the crossing point of the extended line of the salt group line at not higher than the glass transition temperature with the tangent showing the maximum inclination at the transition area.

### (7) Polymer composition:

The resin was dissolved in chloroform-d and the resin composition ratio was determined by means of ¹H-NMR using "Gemini 200" which is a nuclear magnetic resonance analyzer (NMR) manufactured by Varian.

### (8) Average particle size of emulsion particles:

An arithmetic average particle size based on volume particle size was measured using HORIBA LB-500 and was adopted as an average particle size of the emulsion particles.

### (9) Biomass degree:

Fraction by weight of the lactide monomer to the whole charged materials (excluding the solvent and the catalyst) used for the synthesis of the copolymerized polyurethane resin was calculated and adopted as the biomass degree (%).

Hereinafter, each of the abbreviations of the compounds shown in the text and the tables in Examples shows each of the following compounds.
NPG: Neopentyl glycol
EG: Ethylene glycol
TMP: Trimethylolpropane
MDI: 4,4'-Diphenylmethane diisocyanate
PEG#1000: Polyethylene glycol (number-average molecular weight: 1000)
PEG#400: Polyethylene glycol (number-average molecular weight: 400)
MEK: Methyl ethyl ketone
IPA: Isopropyl alcohol

### Synthetic Example 1:

### 1) Synthesis of a diol material G containing sulfonic acid sodium salt group

2,2-Dimethyl-3-hydroxypropyl-2',2'-dimethyl-3'-hydroxypropanate (408 parts), 197 parts of 5-sodium dimethyl sulfoisophthalate and 0.1 part of a tetrabutyl titanate (TBT) catalyst were charged into a one-liter glass flask equipped with a thermometer, a stirring rod and a Liebig condenser. The mixture was made to react with stirring for 1 hour together with distillation of methanol which was distilled at 190°C and, after that, the temperature was raised at the rate of 10°C per hour until 230°C. After confirming the completion of distillation of methanol at 230°C, the temperature was raised up to 250°C, the stirring was conducted for 10 minutes *in vacuo,* the reaction product was cooled down to 100°C, 141 parts of toluene was mixed therewith and the mixture was uniformly dissolved.

Concentration of sulfonic acid metal salt group and acid value in the resulting 80% by weight solution in toluene were as follows.
Concentration of sulfonic acid metal salt group: 948 eq/ton
Acid value: 23 eq/ton,

### 2) Synthesis of a poly(lactic acid) diol-A

NPG (18 parts), 400 parts of L-lactide, 100 parts of D-lactide and 0.15 part of tin octylate as a catalyst were charged into a one-liter glass flask equipped with a thermometer, a stirring rod and a Liebig condenser and allowed to stay in a nitrogen gas stream at ambient temperature for 30 minutes. After that, the inner atmosphere was evacuated at ambient temperature so that the content therein was further dried.

Then the reaction system was heated again up to 180°C in a nitrogen stream followed by stirring for 3 hours. After that, 0.10 part of phosphoric acid was added thereto followed by stirring for 30 minutes. After that, the mixture was evacuated so that the unreacted residual lactide was distilled. At the stage where distillation of the unreacted lactide ceased after about 20 minutes, the content therein was taken out and cooled. Molecular weight and acid value of the resulting poly(lactic acid) diol-A were measured and shown below.
Number-average molecular weight: 3000
Acid value: 24 eq/ton

### 3) Synthesis of a copolymerized polyurethane resin (LU-1)

The above poly(lactic acid) diol-A (100 parts) and 62.5 parts of the above diol material G containing sulfonic acid sodium salt group (a 80% by weight solution in toluene) were dissolved in 200 parts of MEK in a one-liter glass flask equipped with a thermometer, a stirring rod and a condenser followed by heating at 50°C. After that, 38 parts of MDI was dissolved therein and 0.4 part of dibutyl tin laurate as a catalyst was added thereto. After conducting the reaction at 70°C for 4 hours, the reaction mixture was diluted with 238 parts of MEK so that the reaction was ceased. With regard to the resulting copolymerized polyurethane resin (LU-1), its composition is shown in Table 1 while its molecular weight, sodium sulfonate concentration and biomass degree are shown in Table 2.

**[Table 1]**

| | **Sample No.** | **Resin composition (parts by weight)** | | | | | | |
|---|---|---|---|---|---|---|---|---|
| | | **Poly- (lactic acid) diol** | **Diol material G containing sulfonic acid sodium base *** | **MDI** | **PEG #400** | **PEG #1000** | **NPG** | **TMP** |
| Synthetic Example | LU-1 | A:100 | 62.5 | 38 | | | | |
| | LU-2 | A: 100 | 62.5 | 52 | | 25 | | 4 |
| | LU-3 | A:100 | 72.5 | 68 | 40 | | | |
| | LU-4 | B:100 | 25 | 29 | | | 4 | |

| | | | | | | | | |
|---|---|---|---|---|---|---|---|---|
| * 80% by weight solution in toluene | | | | | | | | |

**[Table 2]**

| **Sample No.** | **Number average molecular weight** | **Glass transition temperature (°C)** | **Biomass degree (%)** | **Concentration of sulfonic acid sodium base (eq/ton)** |
|---|---|---|---|---|
| LU-1 | 15000 | 35 | 51 | 315 |
| LU-2 | 32000 | 42 | 42 | 256 |
| LU-3 | 22000 | 48 | 36 | 258 |
| LU-4 | 20000 | 29 | 57 | 253 |
| L-6 | 9200 | 41 | 93 | 104 |

### 4) Preparation of aqueous emulsion (E-1)

An MEK solution (400 parts) of the above copolymerized urethane LU-1 was charged into a two-liter glass flask equipped with a thermometer, a stirring rod and a Liebig condenser and heated at 50°C and 340 parts of deionized water was gradually added thereto together with stirring to uniformly mix. After that, the MEK was distilled *in vacuo* where the content was kept at 50°C to remove about 340 parts of an MEK/water mixture. An average particle size of the resulting aqueous emulsion E-1 was determined and shown in Table 3.

**[Table 3]**

| | **E-1** | **E-2** | **E-3** | **E-4** | **E-6** |
|---|---|---|---|---|---|
| **(nm) Initial average particle size** | 48 | 139 | 87 | 78 | precipitated |
| **Average particle size after standing for 2 months at room temperature (nm)** | 48 | 137 | 88 | 80 | precipitated |
| **Coating Adaptability** | ○ | ○○ | ○○ | ○ | × |

### Synthetic Example 2:

### Synthesis of a copolymerized polyurethane resin (LU-2) and preparation of aqueous emulsion (E-2)

The poly(lactic acid) diol-A (100 parts) obtained in the above Synthetic Example 1 and 62.5 parts of the diol material G containing sulfonic acid sodium salt group (a 80% by weight solution in toluene) were dissolved in 200 parts of MEK in a one-liter glass flask equipped with a thermometer, a stirring rod and a condenser followed by heating at 50°C. After that, 52 parts of MDI was dissolved therein and 0.1 part of dibutyl tin laurate as a catalyst was added thereto. After conducting the reaction for an hour, 25 parts of PEG#1000 was charged. Then after conducting the reaction at 70°C for three hours, 4 parts of TMP was added, and 0.3 part of dibutyl tin laurate as a catalyst was further added. After conducting the reaction at 70°C for 2 more hours, the reaction mixture was diluted with 340 parts of MEK so that the reaction was ceased. With regard to the resulting copolymerized polyurethane resin (LU-2), its composition is shown in Table 1 while its molecular weight, sodium sulfonate concentration and biomass degree are shown in Table 2.

An MEK solution of the above-prepared copolymerized polyurethane resin LU-2 was substituted with water by the same method as mentioned in the case of the aqueous emulsion E-1 whereupon an aqueous emulsion (E-2) was prepared. An average particle size of the resulting emulsion liquid E-2 was determined and shown in Table 3.

### Synthetic Example 3:

### Synthesis of a copolymerized polyurethane resin (LU-3) and preparation of aqueous emulsion (E-3)

The poly(lactic acid) diol-A (100 parts) obtained in the above Synthetic Example 1 and 72.5 parts of the diol material G containing sulfonic acid sodium salt group (a 80% by weight solution in toluene) were dissolved in 300 parts of MEK in a one-liter glass flask equipped with a thermometer, a stirring rod and a condenser followed by heating at 50°C. After that, 68 parts of MDI was dissolved therein and 0.1 part of dibutyl tin laurate as a catalyst was added thereto. After conducting the reaction for an hour, 40 parts of PEG#400 was charged, and 0.3 part of dibutyl tin laurate as a catalyst was further added. After conducting the reaction at 70°C for 2 more hours, the reaction mixture was diluted with 320 parts of MEK so that the reaction was ceased. With regard to the resulting copolymerized polyurethane resin (LU-3), its composition is shown in Table 1 while its molecular weight, sodium sulfonate concentration and biomass degree are shown in Table 2.

An MEK solution of the above-prepared copolymerized polyurethane resin LU-3 was substituted with water by the same method as mentioned in the case of the aqueous emulsion E-1 whereupon an aqueous emulsion (E-3) was prepared. An average particle size of the resulting emulsion liquid E-3 was determined and shown in Table 3.

### Synthetic Example 4:

### 1) Synthesis of a poly(lactic acid) diol-B containing sulfonic acid metal salt group

The diol material G containing sulfonic acid sodium salt group (91 parts) (a 80% by weight solution in toluene) obtained in the Synthetic Example 1, 400 parts of L-lactide, 100 parts of D-lactide and 0.15 part of tin octylate as a catalyst were charged into a one-liter glass flask equipped with a thermometer, a stirring rod and a Liebig condenser and allowed to stay in a nitrogen gas stream at ambient temperature for 30 minutes. After that, the inner atmosphere was evacuated at ambient temperature so that the content therein was further dried.

Then the reaction system was heated again up to 180°C in a nitrogen stream followed by stirring for 3 hours. After that, 0.10 part of phosphoric acid was added thereto and the mixture was evacuated so that the unreacted residual lactide was distilled. At the stage where distillation of the unreacted lactide ceased after about 20 minutes, the content therein was taken out and cooled. Molecular weight and acid value of the resulting poly (lactic acid) diol were measured and shown below.
Number-average molecular weight: 3300
Acid value: 28 eq/ton

### 2) Synthesis of a copolymerized polyurethane resin (LU-4) and preparation of aqueous emulsion (E-4)

The poly(lactic acid) diol-B (100 parts), 25 parts of the diol material G containing sulfonic acid sodium salt group (a 80% by weight solution in toluene) and 4 parts of NPG were dissolved in 150 parts of MEK in a one-liter glass flask equipped with a thermometer, a stirring rod and a condenser followed by heating at 50°C. After that, 29 parts of MDI was dissolved therein and 0.3 part of dibutyl tin laurate as a catalyst was added thereto. After conducting the reaction at 70°C for 4 hours, the reaction mixture was diluted with 207 parts of MEK so that the reaction was ceased. With regard to the resulting copolymerized polyurethane resin (LU-1), its composition is shown in Table 1 while its molecular weight, sodium sulfonate concentration and biomass degree are shown in Table 2. An MEK solution of the above-prepared copolymerized polyurethane resin LU-4 was substituted with water by the same method as mentioned in the case of the aqueous emulsion E-1 whereupon an aqueous emulsion (E-4) was prepared. An average particle size of the resulting emulsion liquid E-4 was determined and shown in Table 3.

### Comparative Synthetic Example 6:

### 1) Preparation of diol-H containing sulfonic acid metal salt group

Toluene (2000 parts) was charged into a three-liter glass flask equipped with a thermometer, a stirring rod and a condenser and heated at 50°C together with stirring. The diol material G containing a sulfonic acid sodium salt group (a 80% by weight solution in toluene) (200 parts) prepared in the above Synthetic Example 1 was gradually poured thereinto during about 10 minutes and, after completion of the pouring, the mixture was further stirred for 1 hour at the same temperature. After that, heating and stirring were ceased followed by being allowed to stand at room temperature for one night. On the next day, the supernatant liquid was removed by decantation followed by being evacuated at room temperature to remove the residual toluene whereupon a glassy fragile solid was prepared.

### 2) Synthesis of a poly(lactic acid) resin (L-6) containing sulfonic acid metal salt group and preparation of aqueous emulsion (E-6)

The above diol-H containing sulfonic acid metal salt group (32 parts), 90 parts of D-lactide, 360 parts of L-lactide and 0.33 part of tin octylate as a catalyst were charged into a one-liter glass flask equipped with a thermometer, a stirring rod and a condenser and allowed to stay in a nitrogen gas stream at ambient temperature for 30 minutes. After that, the inner atmosphere was evacuated at ambient temperature so that the content therein was further dried.

Then the reaction system was heated again up to 180°C in a nitrogen stream followed by stirring for 3 hours. After that, 0.22 part of phosphoric acid was added thereto and the mixture was evacuated so that the unreacted residual lactide was distilled. At the stage where distillation of the unreacted lactide ceased after about 20 minutes, the content therein was taken out and cooled. Molecular weight and sodium sulfonate concentration of the resulting poly(lactic acid) resin were measured and shown in Table 2.

It was attempted to substitute the above-prepared MEK solution of the poly(lactic acid) resin L-6 with water according to the same method as for the aqueous emulsion E-1. However, no emulsion was formed during the process of distilling the MEK but the resin was precipitated on the bottom of the flask.

The poly(lactic acid) resin of Comparative Synthetic Example 6 is a poly(lactic acid) resin having no urethane bond.

### Comparison of stability of emulsions

The resulting emulsion was allowed to stand for two months at room temperature and changes in the particle size of the emulsion particles and changes in the appearance of the emulsion liquid were compared with those immediately after preparation of the emulsion. The result obtained thereby is shown in Table 3.

### Adaptability of the emulsion liquid for coating

The emulsion liquid was applied onto a polyethylene terephthalate (hereinafter, it will be sometimes abbreviated as PET) film of 50 µm thickness using an applicator having a gap of 100 µm and dried for 5 minutes using a hot hair drier of 80°C and the state of the coat was observed. Depending upon the state of the coat, judgment was done as follows and the result is shown in Table 3.
○○: Transparent and flat/smooth coat was formed.
○: Although the coat surface was partially coarse, a transparent coat was obtained as a whole. When the drying temperature was changed to 100°C for 5 minutes, the state of ○○ was resulted.
Δ: Although the coat surface was partially coarse, a transparent coat was obtained as a whole. When the drying temperature was changed to 120°C for 5 minutes, the state of ○○ was resulted.
x: No coat was formed.

It is understood from the result of Table 3 that the emulsion formed by the copolymerized polyurethane resin of the present invention is excellent in its stability upon storage and further that, when it is applied onto the substrate material followed by drying, a transparent and flat/smooth coat is formed.

### Synthetic Example 7:

### 1) Synthesis of diol material-I containing sulfonic acid metal salt group

EG (700 parts), 296 parts of 5-sodium dimethyl sulfoisophthalate, 0.1 part of tetrabutyl titanate (TBT) and 10 parts of triethylamine were charged into a two-liter glass flask equipped with a thermometer, a stirring rod and a Liebig condenser. The mixture was made to react for 1 hour with stirring together with distillation of methanol being distilled at 190°C and, after that, the temperature was raised at the rate of 10°C per hour up to 230°C. After confirming the completion of distillation of methanol at 230°C, the reaction product was cooled and allowed to stand at 5°C for 48 hours.

After the supernatant glycol was removed by decantation, the precipitated white compound was washed with methanol and dried *in vacuo* at 50°C for 24 hours. Concentration and acid value of the resulting sulfonic acid metal salt group in white power were as follows.
Concentration of sulfonic acid metal salt group: 3030 eq/ton
Acid value: 18 eq/ton

### 2) Synthesis of a poly(lactic acid) diol-C containing sulfonic acid metal salt group

The above diol-I containing sulfonic acid sodium salt group (67.4 parts) was charged into a one-liter glass flask equipped with a thermometer and a stirring rod and dried *in vacuo* at 80°C for 2 to 3 hours and the pressure was returned to atmospheric pressure by charging the nitrogen thereinto. On the other hand, 400 parts of L-lactide and 100 parts of D-lactide were charged into another one-liter glass flask, allowed to stand in a nitrogen stream at ambient temperature for 30 minutes and evacuated at ambient temperature for 30 minutes to further dry the content therein whereupon 500 parts of a dry lactide was produced.

The above dry lactide (500 parts), 0.07 part of tin octylate as a catalyst and 0.35 part of ethyl diethyl phosphonoacetate as a catalyst inactivator were charged into a glass flask in which the diol-I containing sulfonic acid metal salt group was placed and the temperature of the reaction system was raised up to 180°C under a nitrogen stream followed by stirring for 3 hours.

After that, the reaction system was evacuated to distil the unreacted residual lactide. After about 20 minutes, the content therein was taken out at the stage when distillation of the unreacted lactide finished followed by cooling. Molecular weight and acid value of the resulting poly(lactic acid) diol-C were measured and shown below.
Number-average molecular weight: 3000
Acid value: 24 eq/ton

### 3) Synthesis of a copolymerized polyurethane (LU-7)

The poly(lactic acid) diol-C (100 parts) and 14.4 parts of PEG#1000 were dissolved in 137 parts of MEK in a one-liter glass flask equipped with a thermometer, a stirring rod and a condenser followed by heating at 60°C. After that, 23 parts of MDI was added therein and heated up to 70°C, followed by stirring for 30 minutes and 0.2 part of dibutyl tin laurate as a catalyst was added thereto. After conducting the reaction at 70°C for four hours, 6 parts of TMP was added, and 0.1 part of dibutyl tin was further added. After conducting the reaction at 70°C for 2 more hours, the reaction mixture was diluted with 200 parts of MEK so that the reaction was ceased.

With regard to the resulting copolymerized polyurethane resin (LU-7), its composition is shown in Table 4 while its molecular weight, sodium sulfonate concentration and biomass degree are shown in Table 5.

### 4) Preparation of aqueous emulsion (E-7)

An MEK solution (400 parts) of the above copolymerized urethane LU-7 was charged into a two-liter glass flask equipped with a thermometer, a stirring rod and a Liebig condenser and heated at 40°C, 70 parts of IPA and 320 parts of deionized water was gradually added thereto together with stirring and keeping the content at 40°C to uniformly mix. After that, the MEK and IPA were distilled *in vacuo* where the content was kept at 40°C to remove about 390 parts of an MEK/IPA/water mixture solution. An average particle size of the resulting aqueous emulsion E-7 was determined and shown in Table 6.

### Synthetic Example 8:

### 1) Synthesis of a poly(lactic acid) diol-D containing sulfonic acid metal salt group

The above diol-I containing sulfonic acid sodium salt group (48.9 parts) was charged into a one-liter glass flask equipped with a thermometer and a stirring rod and dried *in vacuo* at 80°C for 2 to 3 hours and the pressure was returned to atmospheric pressure by charging the nitrogen thereinto. On the other hand, 400 parts of L-lactide and 100 parts of D-lactide were charged into another one-liter glass flask, allowed to stand in a nitrogen stream at ambient temperature for 30 minutes and to be evacuated at ambient temperature for 30 minutes to further dry the content therein whereupon 500 parts of a dry lactide was produced.

The above dry lactide (500 parts), 0.07 part of tin octylate as a catalyst and 0.35 part of ethyl diethyl phosphonoacetate as a catalyst inactivator were charged into a glass flask in which the diol-I containing sulfonic acid metal salt group was placed and the temperature of the reaction system was raised up to 180°C under a nitrogen stream followed by stirring for 3 hours.

After that, the reaction system was evacuated to distil the unreacted residual lactide. After about 20 minutes, the content therein was taken out at the stage when distillation of the unreacted lactide finished followed by cooling. Molecular weight and acid value of the resulting poly(lactic acid) diol-D were measured and shown below.
Number-average molecular weight: 4000
Acid value: 27 eq/ton

### 2) Synthesis of a copolymerized polyurethane resin (LU-8) and preparation of aqueous emulsion (E-8)

The poly(lactic acid) diol-D (100 parts) was dissolved in 118 parts of MEK in a one-liter glass flask equipped with a thermometer, a stirring rod and a condenser followed by heating at 60°C. After that, 17.5 parts of MDI was added therein and heated up to 70°C, followed by stirring for 30 minutes and 0.1 part of dibutyl tin laurate as a catalyst was added thereto. After conducting the reaction at 70°C for four hours, 6 parts of TMP was added, and 0.1 part of dibutyl tin laurate was further added. After conducting the reaction at 70°C for 2 more hours, the reaction mixture was diluted with 170 parts of MEK so that the reaction was ceased.

With regard to the resulting copolymerized polyurethane resin (LU-8), its composition is shown in Table 4 while its molecular weight, sodium sulfonate concentration and biomass degree are shown in Table 5.

An MEK solution of the above-prepared copolymerized polyurethane resin LU-8 was substituted with water by the same method as mentioned in the case of the aqueous emulsion E-7 whereupon an aqueous emulsion (E-8) was prepared. An average particle size of the resulting emulsion E-8 was determined and shown in Table 6.

### Synthetic Example 9:

### 1) Synthesis of a poly(lactic acid) diol-E

NPG (27 parts), 400 parts of L-lactide, 100 parts of D-lactide, 0.07 part of tin octylate as a catalyst and 0.35 part of ethyl diethyl phosphonoacetate as a catalyst inactivator were charged into a one-liter glass flask equipped with a thermometer, a stirring rod and a Liebig condenser and allowed to stand in a nitrogen stream at ambient temperature. Then, the mixture was evacuated at ambient temperature for 30 minutes to further dry the content therein.

The temperature of the reaction system was raised again up to 180°C under a nitrogen stream followed by stirring for 3 hours. After that, the reaction system was evacuated to distil the unreacted residual lactide. After about 20 minutes or distillation of the unreacted lactide is finished, the content therein was taken out and cooled. Molecular weight and acid value of the resulting poly(lactic acid) diol-E were measured and shown below.
Number-average molecular weight: 2000
Acid value: 20 eq/ton

### 2) Synthesis of a copolymerized polyurethane resin (LU-9) and preparation of aqueous emulsion (E-9)

The poly(lactic acid) diol-E (100 parts) and 32.5 parts of the diol material G containing sulfonic acid sodium salt group (a 80% by weight solution in toluene) were dissolved in 160 parts of MEK in a one-liter glass flask equipped with a thermometer, a stirring rod and a condenser followed by heating at 60°C. After that, 40.2 parts of MDI was added therein and heated up to 70°C, followed by stirring for 30 minutes and 0.2 part of dibutyl tin laurate as a catalyst was added thereto. After conducting the reaction at 70°C for two hours, 19 parts of PEG#1000 and 0.1 part of dibutyl tin laurate were further added. After conducting the reaction at 70°C for three hours, 4 parts of TMP and 0.1 part of dibutyl tin laurate were further added. Then, after conducting the reaction at 70°C for 2 hours, the reaction mixture was diluted with 275 parts of MEK so that the reaction was ceased.

With regard to the resulting copolymerized polyurethane resin (LU-9), its composition is shown in Table 4 while its molecular weight, sodium sulfonate concentration and biomass degree are shown in Table 5.

An MEK solution of the above-prepared copolymerized polyurethane resin LU-9 was substituted with water by the same method as mentioned in the case of the aqueous emulsion E-7 whereupon an aqueous emulsion (E-9) was prepared. An average particle size of the resulting emulsion E-9 was determined and shown in Table 6.

### Synthetic Example 10:

### 1) Synthesis of a copolymerized polyurethane resin (LU-10) and preparation of aqueous emulsion (E-10)

The poly(lactic acid) diol-E (100 parts) and 32.5 parts of the diol material G containing sulfonic acid sodium salt group (a 80% by weight solution in toluene) were dissolved in 160 parts of MEK in a one-liter glass flask equipped with a thermometer, a stirring rod and a condenser followed by heating at 60°C. After that, 40.2 parts of MDI was added therein and heated up to 70°C, followed by stirring for 30 minutes and 0.2 part of dibutyl tin laurate as a catalyst was added thereto. After conducting the reaction at 70°C for two hours, 19 parts of polypropylene glycol (PPG) #1000 and 0.1 part of dibutyl tin laurate were further added. After conducting the reaction at 70°C for three hours, 4 parts of TMP and 0.1 part of dibutyl tin laurate were further added. After conducting the reaction at 70°C for 2 hours, the reaction mixture was diluted with 275 parts of MEK so that the reaction was ceased.

With regard to the resulting copolymerized polyurethane resin (LU-10), its composition is shown in Table 4 while its molecular weight, sodium sulfonate concentration and biomass degree are shown in Table 5.

An MEK solution of the above-prepared copolymerized polyurethane resin LU-10 was substituted with water by the same method as mentioned in the case of the aqueous emulsion E-7 whereupon an aqueous emulsion (E-10) was prepared. An average particle size of the resulting emulsion E-10 was determined and shown in Table 6.

### Synthetic Example 11:

### 1) Synthesis of a copolymerized polyurethane resin (LU-11) and preparation of aqueous emulsion (E-11)

The poly(lactic acid) diol-E (100 parts) and 32.5 parts of the diol material G containing sulfonic acid sodium salt group (a 80% by weight solution in toluene) were dissolved in 160 parts of MEK in a one-liter glass flask equipped with a thermometer, a stirring rod and a condenser followed by heating at 60°C. After that, 40.2 parts of MDI was added therein and heated up to 70°C, followed by stirring for 30 minutes and 0.2 part of dibutyl tin laurate as a catalyst was added thereto. After conducting the reaction at 70°C for two hours, 19 parts of polytetramethylene glycol (PTMG) #1000 and 0.1 part of dibutyl tin laurate were further added. After conducting the reaction at 70°C for three hours, 4 parts of TMP and 0.1 part of dibutyl tin laurate were further added. After conducting the reaction at 70°C for 2 hours, the reaction mixture was diluted with 275 parts of MEK so that the reaction was ceased.

With regard to the resulting copolymerized polyurethane resin (LU-11), its composition is shown in Table 4 while its molecular weight, sodium sulfonate concentration and biomass degree are shown in Table 5.

An MEK solution of the above-prepared copolymerized polyurethane resin LU-11 was substituted with water by the same method as mentioned in the case of the aqueous emulsion E-7 whereupon an aqueous emulsion (E-11) was prepared. An average particle size of the resulting emulsion E-11 was determined and shown in Table 6.

### Synthetic Example 12:

### 1) Synthesis of a copolymerized polyurethane resin (LU-12) and preparation of aqueous emulsion (E-12)

The poly(lactic acid) diol-E (100 parts) and 23.8 parts of the diol material G containing sulfonic acid sodium salt group (a 80% by weight solution in toluene) were dissolved in 150 parts of MEK in a one-liter glass flask equipped with a thermometer, a stirring rod and a condenser followed by heating at 60°C. After that, 33.8 parts of MDI was added therein and heated up to 70°C, followed by stirring for 30 minutes and 0.2 part of dibutyl tin laurate as a catalyst was added thereto. After conducting the reaction at 70°C for two hours, 17.4 parts of PEG#1000 and 0.1 part of dibutyl tin laurate were further added. After conducting the reaction at 70°C for three hours, 3 parts of TMP and 0.1 part of dibutyl tin laurate was further added. Then, after conducting the reaction at 70°C for 2 hours, the reaction mixture was diluted with 250 parts of MEK so that the reaction was ceased.

With regard to the resulting copolymerized polyurethane resin (LU-12), its composition is shown in Table 4 while its molecular weight, sodium sulfonate concentration and biomass degree are shown in Table 5.

An MEK solution of the above-prepared copolymerized polyurethane resin LU-12 was substituted with water by the same method as mentioned in the case of the aqueous emulsion E-7 whereupon an aqueous emulsion (E-12) was prepared. An average particle size of the resulting emulsion E-12 was determined and shown in Table 6.

### Synthetic Example 13:

### 1) Synthesis of a copolymerized polyurethane resin (LU-13) and preparation of aqueous emulsion (E-13)

The poly(lactic acid) diol-E (100 parts) and 15.3 parts of the diol material G containing sulfonic acid sodium salt group (a 80% by weight solution in toluene) were dissolved in 140 parts of MEK in a one-liter glass flask equipped with a thermometer, a stirring rod and a condenser followed by heating at 60°C. After that, 29.4 parts of MDI was added therein and heated up to 70°C, followed by stirring for 30 minutes and 0.2 part of dibutyl tin laurate as a catalyst was added thereto. After conducting the reaction at 70°C for two hours, 16 parts of PEG#1000 and 0.1 part of dibutyl tin laurate were further added. After conducting the reaction at 70°C for three hours, 3 parts of TMP and 0.1 part of dibutyl tin laurate was further added. Then, after conducting the reaction at 70°C for 2 hours, the reaction mixture was diluted with 232 parts of MEK so that the reaction was ceased.

With regard to the resulting copolymerized polyurethane resin (LU-13), its composition is shown in Table 4 while its molecular weight, sodium sulfonate concentration and biomass degree are shown in Table 5.

An MEK solution of the above-prepared copolymerized polyurethane resin LU-13 was substituted with water by the same method as mentioned in the case of the aqueous emulsion E-7 whereupon an aqueous emulsion (E-13) was prepared. An average particle size of the resulting emulsion E-13 was determined and shown in Table 6.

### Synthetic Example 14:

### 1) Synthesis of a copolymerized polyurethane resin (LU-14) and preparation of aqueous emulsion (E-14)

The poly(lactic acid) diol-E (100 parts) and 9.5 parts of the diol material G containing sulfonic acid sodium salt group (a 80% by weight solution in toluene) were dissolved in 135 parts of MEK in a one-liter glass flask equipped with a thermometer, a stirring rod and a condenser followed by heating at 60°C. After that, 26.4 parts of MDI was added therein and heated up to 70°C, followed by stirring for 30 minutes and 0.2 part of dibutyl tin laurate as a catalyst was added thereto. Then after conducting the reaction at 70°C for two hours, 15.2 parts of PEG#1000 was added. After conducting the reaction at 70°C for three more hours, 3 parts of TMP and 0.1 part of dibutyl tin laurate was further added. After conducting the reaction at 70°C for 2 hours, the reaction mixture was diluted with 220 parts of MEK so that the reaction was ceased.

With regard to the resulting copolymerized polyurethane resin (LU-14), its composition is shown in Table 4 while its molecular weight, sodium sulfonate concentration and biomass degree are shown in Table 5.

An MEK solution of the above-prepared copolymerized polyurethane resin LU-14 was substituted with water by the same method as mentioned in the case of the aqueous emulsion E-7 whereupon an aqueous emulsion (E-14) was prepared. An average particle size of the resulting emulsion E-14 was determined and shown in Table 6.

### Synthetic Example 15:

### 1) Synthesis of diol material J containing sulfonic acid quaternary phosphonium salt group

A 60% by weight solution of tetrabutyl phosphonium bis(2-hydroxyethyl)-5-sulfoisophthalate in ethylene glycol (manufactured by Takemoto Yushi KK) was charged into a one-liter flask equipped with a thermometer, a stirring rod and a Liebig condenser and stirred *in vacuo* at 100°C for 10 hours so that ethylene glycol was distilled off. Concentration and acid value of the resulting phosphonic acid salt group in a viscous liquid were as follows.
Concentration of quaternary phosphonic acid salt group: 1550 eq/ton
Acid value: 21 eq/ton

### 2) Synthesis of a poly(lactic acid) diol-F containing sulfonic acid quaternary phosphonium salt group

The above diol-J containing sulfonic acid quaternary phosphonium salt group (120 parts) was charged into a one-liter glass flask equipped with a thermometer and a stirring rod and dried *in vacuo* at 80°C for 3 hours and the pressure was returned to atmospheric pressure by charging the nitrogen thereinto. On the other hand, 400 parts of L-lactide and 100 parts of D-lactide were charged into another one-liter glass flask, allowed to stand in a nitrogen stream at ambient temperature for 30 minutes and evacuated at ambient temperature for 30 minutes to further dry the content therein whereupon a dry lactide was produced.

The above dry lactide (500 parts), 0.07 part of tin octylate and 0.35 part of ethyl diethyl phosphonoacetate as a catalyst inactivator were charged into a glass flask in which the diol-J containing sulfonic acid quaternary phosphonium salt group was placed and the temperature of the reaction system was raised up to 180°C in a nitrogen stream followed by stirring for 3 hours.

Then, the mixture was evacuated so that the unreacted residual lactide was distilled. After about 20 minutes or distillation of the unreacted lactide is ceased, the content therein was taken out and cooled. Molecular weight and acid value of the resulting poly(lactic acid) diol-F were measured and shown below.
Number-average molecular weight: 3200
Acid value: 21 eq/ton

### 3) Synthesis of a copolymerized polyurethane (LU-15)

The poly(lactic acid) diol-F (100 parts) and 14.4 parts of PEG#1000 were dissolved in 137 parts of MEK in a one-liter glass flask equipped with a thermometer, a stirring rod and a condenser followed by heating at 60°C. After that, 22 parts of MDI was added therein and heated up to 70°C, followed by stirring for 30 minutes and 0.1 part of dibutyl tin laurate as a catalyst was added thereto. After conducting the reaction at 70°C for four hours, 6 parts of TMP and 0.2 part of dibutyl tin laurate was further added. After conducting the reaction at 70°C for 2 more hours, the reaction mixture was diluted with 200 parts of MEK so that the reaction was ceased.

With regard to the resulting copolymerized polyurethane resin (LU-15), its composition is shown in Table 4 while its molecular weight, quaternary phosphonium salt group concentration and biomass degree are shown in Table 5.

### 4) Preparation of aqueous emulsion (E-15)

An MEK solution (400 parts) of the above copolymerized polyurethane resin LU-15 was charged into a two-liter glass flask equipped with a thermometer, a stirring rod and a Liebig condenser and heated at 40°C and 70 parts of IPA and 320 parts of deionized water were gradually added thereto together with keeping the content at 40°C followed by mixing uniformly. After that, MEK and IPA were distilled off *in vacuo* together with keeping the content at 40°C whereupon about 390 parts of a mixed liquid of MEK/IPA/water was removed. An average particle size of the resulting aqueous emulsion E-15 was determined and shown in Table 6.

### Synthetic Example 16:

### 1) Synthesis of a poly(lactic acid) diol-K containing sulfonic acid metal salt group

The above diol-I containing sulfonic acid sodium salt group (31.6 parts) was charged into a one-liter glass flask equipped with a thermometer and a stirring rod and dried *in vacuo* at 80°C for 2 to 3 hours and the pressure was returned to atmospheric pressure by charging the nitrogen thereinto. On the other hand, 400 parts of L-lactide and 100 parts of D-lactide were charged into another one-liter glass flask, allowed to stand in a nitrogen stream at ambient temperature for 30 minutes and evacuated at ambient temperature for 30 minutes to further dry the content therein whereupon a dry lactide (500 parts) was produced.

The above dry lactide (500 parts), 0.07 part of tin octylate as a catalyst and 0.35 part of ethyl diethyl phosphonoacetate as a catalyst inactivator were charged into a glass flask in which the diol- I containing sulfonic acid metal salt group was placed and the temperature of the reaction system was raised up to 180°C in a nitrogen stream followed by stirring for 3 hours.

Then, the mixture was evacuated so that the unreacted residual lactide was distilled. After about 20 minutes, and at a point of time when distillation of the unreacted lactide is ceased, the content therein was taken out and cooled. Molecular weight and acid value of the resulting poly(lactic acid) diol-K were measured and shown below.
Number-average molecular weight: 6000
Acid value: 40 eq/ton

### 2) Synthesis of a copolymerized polyurethane resin (LU-16) and preparation of aqueous emulsion (E-16)

The poly(lactic acid) diol-K (100 parts) and 8.4 parts of PEG#1000 were dissolved in 118 parts of MEK in a one-liter glass flask equipped with a thermometer, a stirring rod and a condenser followed by heating at 60°C. After that, 9.7 parts of MDI was added therein and heated up to 70°C, followed by stirring for 30 minutes and 0.1 part of dibutyl tin laurate as a catalyst was added thereto. After conducting the reaction at 70°C for four hours, 1.8 parts of TMP was added and 0.1 part of dibutyl tin laurate was further added. After conducting the reaction at 70°C for 2 more hours, the reaction mixture was diluted with 160 parts of MEK so that the reaction was ceased.

With regard to the resulting copolymerized polyurethane resin (LU-16), its composition is shown in Table 4 while its molecular weight, sodium sulfonate concentration and biomass degree are shown in Table 5.

An MEK solution of the above-prepared copolymerized polyurethane resin LU-16 was substituted with water by the same method as mentioned in the case of the aqueous emulsion E-7 whereupon an aqueous emulsion (E-16) was prepared. An average particle size of the resulting emulsion E-16 was determined and shown in Table 6.

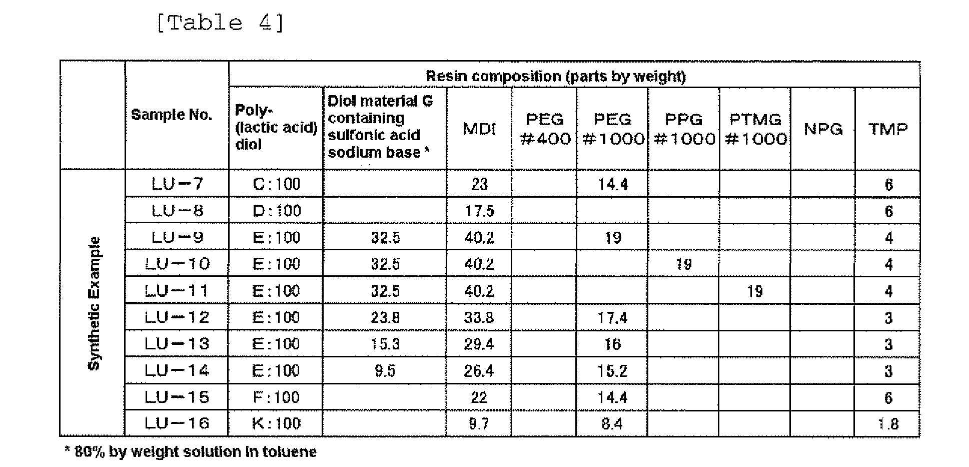

**[Table 5]**

| Sample No. | Number-average molecular weight (×10⁻³) | Glass transition temperature (°C) | Biomass degree (%) | Concentration of sulfonic acid sodium base (eq/ton) | Concentration of sulfonic acid quaternary phosphonium base (eq/ton) |
|---|---|---|---|---|---|
| LU-7 | 14 | 49 | 61 | 232 | |
| LU-8 | 23 | 53 | 74 | 202 | |
| LU-9 | 20 | 48 | 50 | 163 | |
| LU-10 | 17 | 47 | 50 | 163 | |
| LU-11 | 16 | 46 | 50 | 163 | |
| LU-12 | 23 | 48 | 55 | 130 | |
| LU-13 | 21 | 43 | 60 | 90 | |
| LU-14 | 23 | 48 | 62 | 59 | |
| LU-15 | 22 | 46 | 57 | | 212 |
| LU-16 | 21 | 45 | 78 | 139 | |

**[Table 6]**

| | E-7 | E-8 | E-9 | E-10 | E-11 | E-12 | E-13 | E-14 | E-15 | E-16 |
|---|---|---|---|---|---|---|---|---|---|---|
| (nm) Initial average particle size | 116 | 173 | 38 | 81 | 95 | 91 | 111 | 194 | 128 | 225 |
| Average particle size after standing for 2 months at room temperature (nm) | 119 | 176 | 41 | 80 | 93 | 89 | 113 | 198 | 131 | 326 |
| Coating Adaptability | ○○ | Δ | ○ | Δ | Δ | ○ | Δ | Δ | ○ | ○ |

### Industrial Applicability

The copolymerized polyurethane resin of the present invention can form an aqueous emulsion having an excellent stability upon storage and can be used in broad areas including industrial products such as inks, coating agents, adhesives and primers etc., and detergents for clothing or tableware, toothpastes, shampoos, rinses, cosmetics, milky lotions, hair dressing agents, perfumes, lotions and ointments. Further, when an aqueous emulsion containing the copolymerized polyurethane resin of the present invention or a coating agent containing the same is applied onto a substrate film such as PET, a transparent and flat/smooth coating layer is obtained. Accordingly, this coating agent is expected to contribute in the industrial world as a coating agent paying attention to the environments.

## Claims

1. A copolymerized polyurethane resin having a poly(lactic acid) segment and a segment containing sulfonic acid salt group in a molecule.

2. The copolymerized polyurethane resin according to claim 1, wherein the segment containing sulfonic acid salt group comprises a copolymerized ester.

3. The copolymerized polyurethane resin according to claim 1 or 2, wherein the sulfonic acid salt group is one or more member(s) selected from sulfonic acid metal salt group, sulfonic acid quaternary ammonium salt group and sulfonic acid quaternary sulfonium salt group.

4. The copolymerized polyurethane resin according to any of claims 1 to 3, wherein the resin comprises a structure being bonded by a polyaddition reaction of a poly(lactic acid) diol (A), a sulfonic acid salt group-containing diol (B) and a diol (C) other than (A) and (B) with a diisocyanate compound (D).

5. The copolymerized polyurethane resin according to any of claims 1 to 4, wherein the concentration of the sulfonic acid salt group is 50 eq/ton to 500 eq/ton.

6. The copolymerized polyurethane resin according to claim 4, wherein the diol (C) contains 2,2-dimethyl-3-hydroxypropyl-2',2'-dimethyl-3'-hydroxypropa nate.

7. The copolymerized polyurethane resin according to claim 4, wherein the diol (C) contains a polyether diol.

8. The copolymerized polyurethane resin according to claim 4, wherein 0.1 molar % to 5 molar % of the total amount of the diols (A), (B) and (C) is substituted with a polyol of three or more functions.

9. The copolymerized polyurethane resin according to claim 4, wherein 0.1 molar % to 5 molar % of the diisocyanate compound (D) is substituted with a polyisocyanate of three or more functions.

10. The copolymerized polyurethane resin according to claim 4, wherein the molar ratio (L/D) of L-lactic acid to D-lactic acid constituting the diol (A) is from 1 to 9 and the total weight fraction of L-lactic acid residue and D-lactic acid residue to the diol (A) is 50% by weight or more.

11. An aqueous emulsion wherein the copolymerized polyurethane resin mentioned in any of claims 1 to 10 is dispersed in a liquid.

12. The aqueous emulsion according to claim 11, wherein an average particle size of the emulsion particles is 400 nm or smaller.

13. The aqueous emulsion according to claim 11 or 12, wherein the copolymerized polyurethane resin is self-emulsified.

14. A coating solution composition which contains the aqueous emulsion mentioned in any of claims 11 to 13.
